# EUROPÄISCHE PATENTSCHRIFT

(11) **EP 3 201 132 B1**
(45) Veröffentlichungstag und Bekanntmachung des Hinweises auf die Patenterteilung: **22.08.2018**
(21) Anmeldenummer: 15771521.0
(22) Anmeldetag: 10.09.2015
(51) Int. Cl.: C01B 33/158, C01B 33/16, G02F 1/1335, G02F 1/13363

(54) **VERFAHREN ZUR HERSTELLUNG VON AEROGELEN**
METHOD FOR PRODUCING AEROGELS
PROCÉDÉ DE PRÉPARATION D'AÉROGELS

(30) Priorität: 02.10.2014 DE 102014014377; 03.12.2014 DE 102014117759
(43) Veröffentlichungstag der Anmeldung: 09.08.2017
(60) Teilanmeldung: 18181927.7
(73) Patentinhaber: Interbran Systems AG, 67360 Lingenfeld (DE)
(72) Erfinder: BÜTTNER, Siegmar, 68519 Viernheim (DE); SCHÜMCHEN, Kurt, 53949 Dahlem (DE)
(74) Vertreter: Von Rohr Patentanwälte Partnerschaft mbB
(86) Internationale Anmeldenummer: PCT/EP2015/070708
(87) Internationale Veröffentlichungsnummer: WO 2016/050474

(56) Entgegenhaltungen:
- EP-A1- 0 849 220
- US-A1- 2008 316 404
- US-A1- 2011 237 692
- RAO A V ET AL: "Comparative studies on the surface chemical modification of silica aerogels based on various organosilane compounds of the type RnSiX4-n", JOURNAL OF NON-CRYSTALLINE SOLIDS, NORTH-HOLLAND PHYSICS PUBLISHING. AMSTERDAM, NL, Bd. 350, 15. Dezember 2004 (2004-12-15), Seiten 216-223, XP004905662, ISSN: 0022-3093, DOI: 10.1016/J.JNONCRYSOL.2004.06.034
- DATABASE WPI Week 201308 Thomson Scientific, London, GB; AN 2011-P71418 XP002750852, & KR 2011 0125773 A (FINETEC CORP) 22. November 2011 (2011-11-22)
- DATABASE WPI Week 201556 Thomson Scientific, London, GB; AN 2015-46245R XP002750853, -& WO 2015/119431 A1 (LG CHEM LTD) 13. August 2015 (2015-08-13) & EP 2 927 194 A1 (LG CHEMICAL LTD [KR]) 7. Oktober 2015 (2015-10-07)
- DATABASE WPI Week 201567 Thomson Scientific, London, GB; AN 2015-49912R XP002750854, & KR 2015 0093063 A (LG CHEM LTD) 17. August 2015 (2015-08-17)
- DATABASE WPI Week 201370 Thomson Scientific, London, GB; AN 2013-B97061 XP002754656, -& CN 102 765 725 A (BLUE SMOKE BEIJING TECHNOLOGY CO LTD) 7. November 2012 (2012-11-07)

## Beschreibung

Die vorliegende Erfindung betrifft das technische Gebiet der Aerogele, insbesondere der Silica-Aerogele.

Insbesondere betrifft die vorliegende Erfindung ein Verfahren zur Herstellung von Aerogelen sowie die mit dem erfindungsgemäßen Verfahren erhältlichen Aerogele und deren Verwendungen, insbesondere in Dämmstoffen. Des Weiteren betrifft die vorliegende Erfindung ein Verfahren zur Trocknung von Aerogelen.

Silikatbasierte Aerogele, sogenannte Silica-Aerogele, leiten sich von der OrthoKieselsäure H₄SiO₄ und deren Kondensationsprodukten ab. Sie sind hochporöse Feststoffe mit einem Porenvolumen von im Allgemeinen 95 bis 99,8 Vol.-%, bezogen auf das Gesamtvolumen des Aerogels. Aufgrund der hohen Porosität sind Aerogele schlechte Wärme- und Schallleiter und somit für die Entwicklung von Dämm- und Isolationsmaterialien interessant.

Der Anwendungsbereich von Aerogelen im Bereich der Isolations- und Dämmstoffe beschränkt sich jedoch weitgehend auf einige Spezialanwendungen, da Aerogele aufgrund ihrer hohen Porosität äußerst fragile Festkörperstrukturen darstellen, welche selbst bei relativ geringer mechanischer Belastung zerstört werden. Darüber hinaus ist die Darstellung von Aerogelen recht kostenintensiv und mit einem hohen apparativen Aufwand verbunden, weshalb Aerogele bislang in Isolations- und Dämmmaterialien nicht wirtschaftlich sinnvoll eingesetzt werden können.

Erste Synthesen von Silica-Aerogel sind seit den 1930er-Jahren bekannt. Silica-Aerogel wird üblicherweise nach dem Sol-Gel-Verfahren hergestellt. Die klassische Aerogel-Synthese geht von einer verdünnten Natriumsilikatlösung aus, welche mit Salzsäure angesäuert wird, woraufhin ein amorphes Gel, das sogenannte Hydrogel, ausfällt. Die Trocknung des Gels und somit die Gewinnung eines Aerogels erfolgt in einem Autoklaven unter überkritischen Bedingungen, wodurch sich dieses Verfahren äußerst aufwendig und kostenintensiv gestaltet. Die überkritische Trocknung des Aerogels bzw. Entfernung des Lösemittels ist notwendig, da andernfalls aufgrund der hochporösen Struktur des Aerogels die bei der Entfernung des Lösemittels wirkenden Kapillarkräfte die Festkörperstruktur des Aerogels zerstören.

Alternative Methoden zur Herstellung von silikatbasierten Aerogelen gehen von der Hydrolyse von Organsilanen, wie beispielsweise Tetramethoxyorthosilikat bzw. Tetraethoxyorthosilikat, aus, wobei gleichfalls ein Hydrogel bzw. Alkogel gebildet wird und das Lösemittel im überkritischen Bereich entfernt wird. Um das Verfahren einfacher und weniger energieintensiv zu gestalten, wurden Möglichkeiten entwickelt, das Lösemittel bzw. die Lösemittelgemische durch Kohlendioxid zu ersetzen und dies durch eine überkritische Trocknung zu entfernen. Aber auch diese Variante ist apparativ zu aufwendig, um im industriellen Maßstab kostengünstig durchgeführt zu werden.

Darüber hinaus wurden auch Ansätze entwickelt, das Aerogel unter gemäßigteren Bedingungen zu trocknen. Hierzu wird im Allgemeinen das erhaltene Hydrogel bzw. Alkogel hydrophobiert, insbesondere durch Silylierung, beispielsweise mit Dimethylchlorsilan oder Trimethylchlorsilan. Anschließend wird ein Lösemittelaustausch vorgenommen, bei welchem das im Reaktionsgemisch vorhandene polare Lösemittel gegen ein unpolares Lösemittel ausgetauscht wird, um die Oberflächenspannung und somit die Kapillarkräfte noch weiter zu senken. Derartige oberflächenmodifizierte Hydrogele bzw. Alkogele können durch destillative Entfernung des Lösemittels und anschließende Trocknung des Hydrogels bzw. Alkogels bei Temperaturen von über 100 °C zu Aerogelen umgesetzt werden. Durch die Kapillarkräfte schrumpft das Aerogel während des Trocknungsvorgangs, wird jedoch nicht zerstört und nimmt nach Beendigung der Trocknung seine ursprüngliche Gestalt wieder an.

Da aber auch diese Verfahren apparativ sehr aufwendig und zeitintensiv sind und darüber hinaus im Allgemeinen zu Aerogelen führen, welche mechanischen Belastungen nur schwer standhalten, gibt es Bemühungen, die Herstellungsverfahren für Aerogele sowie die physikalischen Parameter der Aerogele weiter zu optimieren.

So beschreibt die DE 195 38 333 A1 ein Verfahren zur unterkritischen Herstellung von Aerogelen, wobei durch Versprühen eines Hydrosols in Paraffin Sol-Kugeln eines prädeterminierten Durchmessers erzeugt werden und die Kugeln nach Gelbildung erneut mit einer Polykieselsäurelösung behandelt werden. Anschließend wird optional eine Hydrophobierung durchgeführt und nachfolgend ein Lösemittelaustausch vorgenommen. Schließlich wird das erhaltene Aerogel unter überkritischen Bedingungen getrocknet.

Die DE 195 41 992 A1 betrifft ein Verfahren zur Herstellung von anorganisch modifizierten Aerogelen unter Verwendung von Alkoholen, wobei eine wässrige Wasserglaslösung zur Herstellung eines Hydrosols mit einer anorganischen Säure versetzt wird und die sich bildenden Salze weitestgehend entfernt werden. Anschließend wird das Gel mit organischem Lösemittel gewaschen, um den Wassergehalt unter 5 Gew.-% zu senken, woraufhin eine Oberflächenmodifizierung und anschließende Trocknung des erhaltenen Gels durchgeführt wird.

Weiterhin betrifft die DE 196 48 798 C2 ein Verfahren zur Herstellung von organisch modifizierten Aerogelen durch Oberflächenmodifikation des wässrigen Gels ohne vorherigen Lösemittelaustausch und anschließende Trocknung.

Die DE 197 52 456 A1 betrifft ein Verfahren zur Herstellung von organisch modifizierten Aerogelen ausgehend von Siliciumtetrachlorid.

Schließlich betrifft die EP 0 171 722 A1 ein Verfahren zur Trocknung von Hydrogelen, insbesondere silikatbasierten Hydrogelen, wobei erst der Wasseranteil des Hydrogels gegen Methanol ausgetauscht wird, welches anschließend wiederum durch Kohlendioxid ersetzt wird. Schließlich erfolgt eine überkritische Entfernung des Kohlendioxids.

All diesen Verfahren ist jedoch gemein, dass auch sie kein partikelförmiges, mechanisch ausreichend stabiles Aerogel unter ökonomisch sinnvollen Rahmenbedingungen bereitstellen können, welches breite Anwendung in Isolations- und Dämmmaterialien erlangen könnte.

Darüber hinaus sind die geschilderten Verfahren des Standes der Technik allesamt komplexe mehrstufige Verfahren, welche üblicherweise nur unter Verwendung zahlreicher organischer Lösemittel und weiterer Additive möglich sind. Da die verwendeten Stoffe oftmals ätzend, giftig bzw. brennbar sind oder unter hohem Druck verwendet werden, müssen besondere Sicherheitsvorkehrungen im Umgang mit diesen Stoffen und zu ihrer Entsorgung getroffen werden. Dies treibt die Kosten für die Aerogel-Herstellung weiter in die Höhe, so dass derzeit Preise von bis zu 120,-- €/kg für Silica-Aerogele gezahlt werden müssen.

Die wissenschaftliche Publikation A.V. Rao, G.M. Pajonk, S.D. Bhagat und P. Barboux, "Comparative studies on the surface chemical modification of silica aerogels based on various organosilane compounds of the type RnSiX4-n", Journal of Non-Crystalline Solids 350, 2004, Seiten 216-223 betrifft die Oberflächenmodifizierung von Silica-Aerogelen durch Verwendung von Prekursoren und Co-Prekursoren auf Basis von mono-, di-, tri- und tetrafunktionalen Organosilanen des Typs RₙSiX₄₋ₙ mit R = Alkyl oder Aryl und X = Cl oder Alkoxy sowie n = 0-4.

Weiterhin betrifft das Dokument US 2008/0316404 A1 eine vertikal angeordnete Einheit eines Flüssigkristalldisplays mit mindestens einer biaxial optisch anisotropen Schicht und einer Flüssigkristallzelle. Die Anordnung weist eine Folie mit einem geringen Refraktionsindex auf, welche poröse Partikel enthält. Bei den porösen Partikeln kann es sich um Silica-Aerogelpartikel handeln.

Weiterhin betrifft das Dokument US 2011/0237692 A1 Verfahren zur Herstellung von Hybridaerogelen, welche aus Metalloxidprekursoren und einem verzweigten Telechelen-Copolymer durch Co-Hydrolysation und Co-Kondensation zugänglich sind.

Schließlich betrifft das Dokument EP 0 849 220 A1 ein Verfahren zur Herstellung eines Aerogels, welches die folgenden Schritte umfasst: Senken des pH-Wertes einer Wasserglaslösung um ein Sol zu erhalten, Gelieren des Sols um ein Hydrogel zu erhalten, Austausch des Wassers in dem Gel gegen ein organisches Lösemittel und Umsetzung des Gels mit einem Hydrophobierungsmittel, welches hydrophobe Gruppen sowie funktionelle Gruppen aufweist, die mit Silanolgruppen in flüssiger Phase reagieren können.

Der vorliegenden Erfindung liegt daher die Aufgabe zugrunde, ein Verfahren zur Herstellung eines Aerogels zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, ein Verfahren zur Herstellung von Aerogelen zur Verfügung zu stellen, welches mit möglichst wenig Verfahrensschritten auskommt, einfach durchzuführen ist und nach Möglichkeit auf die Verwendung problematischer Stoffe, wie beispielsweise brennbarer oder giftiger Lösemittel, verzichtet.

Darüber hinaus ist es eine weitere Aufgabe der vorliegenden Erfindung, ein Aerogel zur Verfügung zu stellen, welches kostengünstig zu produzieren ist, mechanisch belastbar ist und sich zur Verwendung in Dämmstoffen eignet.

Die zuvor gestellte Aufgabenstellung wird erfindungsgemäß durch ein Verfahren nach Anspruch 1 gelöst; weiterer vorteilhafte Weiterbildungen und Ausgestaltungen des erfindungsgemäßen Verfahrens sind Gegenstand der diesbezüglichen Unteransprüche.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es ich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Verfahren zur Herstellung von Aerogelen, wobei
(a) in einem ersten Verfahrensschritt ein Hydrosol hergestellt wird; und
(b) in einem nachfolgenden zweiten Verfahrensschritt das Hydrosol in Gegenwart mindestens eines Hydrophobierungsmittels zu einem Hydrogel umgesetzt wird, wobei das Hydrophobierungsmittel ausgewählt ist aus Silanen, Polysiloxanen und Silikonaten sowie deren Mischungen, und
(c) in einem auf Verfahrensschritt (b) folgenden Verfahrensschritt (c) das in Verfahrensschritt (b) erhaltene Hydrogel zu einem Aerogel verarbeitet wird, wobei das in Verfahrensschritt (b) erhaltene Hydrogel isoliert, nachfolgend gegebenenfalls zerkleinert und anschließend getrocknet wird,
wobei zur Durchführung des Verfahrens nur ein Löse- oder Dispersionsmittel verwendet wird, wobei das Löse- oder Dispersionsmittel Wasser ist.

Aerogele, insbesondere Silica-Aerogele werden üblicherweise durch Sol-Gel-Verfahren gewonnen. Bei Sol-Gel-Verfahren werden Vorläufersubstanzen, sogenannte Prekursoren, durch Solvolyse oder Hydrolyse in die entsprechenden Lösungen oder Dispersionen bzw. kolloidalen Lösungen, das sogenannte Sol, überführt. Aus dem Sol entstehen durch weitere Polymerisationsreaktionen, insbesondere Kondensationsreaktionen, hochpolymere Makromoleküle, das sogenannte Gel. Wenn die Synthese in wässriger Phase stattfindet, werden das Sol und das Gel auch als Hydrosol und Hydrogel bezeichnet. Mit Sol-Gel-Verfahren sind insbesondere polymere Materialien auf Basis nichtmetallischer anorganischer sowie metallischer Materialien zugänglich.

Unter einer Hydrophobierung ist im Rahmen der vorliegenden Erfindung eine Änderung der Grenzflächeneigenschaften insbesondere des Gelmaterials zu verstehen, welche die Wechselwirkung der Oberfläche mit polaren Stoffen schwächt. Insbesondere ist im Rahmen der vorliegenden Erfindung unter einer Hydrophobierung eine Oberflächenmodifizierung des Hydrogels zu verstehen. Im Zuge der Hydrophobierung wird die Oberfläche des Gels, insbesondere des Hydrogels, derart verändert, dass die Wechselwirkungen zwischen der Oberfläche und polaren Stoffen, wie beispielsweise Alkoholen oder Wasser, minimiert werden.

Wie die Anmelderin in überraschender Weise herausgefunden hat, wird insbesondere durch eine *in situ*-Hydrophobierung - d. h. durch eine Hydrophobierung der Grenzfläche des Gels, während das Gel gebildet wird - während der Bildung des Gels, insbesondere des Hydrogels, die Synthese von hydrophobierten Aerogelen in nur einem Löse- bzw. Dispersionsmittel möglich. Die Wechselwirkungen zwischen der Oberfläche und polaren Stoffen, wie beispielsweise Alkoholen oder Wasser, wird dabei derart geschwächt, dass bei der Trocknung eine problemlose Entfernung des Löse- bzw. Dispersionsmittels möglich wird, ohne dass die Aerogelstruktur zerstört wird. Dies ist ungewöhnlich, da insbesondere bei der Herstellung von Silica-Aerogelen, in der Regel ein langwieriger Lösemittelaustausch von Alkohol oder Wasser gegen unpolarere Lösemittel vorgenommen werden muss, um eine vollständige Entfernung dieser unpolaren Löse- oder Dispersionsmittel zu erzielen. Oftmals muss sogar das gewonnene Hydrogel durch Lösemittelaustausch erst in ein Alkogel überführt werden, bevor anschließend weitere Lösemittelwechsel durchgeführt werden können.

Durch eine *in situ*-Hydrophobierung bzw. eine Hydrophobierung während der Bildung des Gels wird im Rahmen der vorliegenden Erfindung eine effiziente Hydrophobierung auch der inneren Grenzflächen, insbesondere der Poren, des Aerogels erreicht, so dass selbst eine weitgehend zerstörungsfreie Entfernung von Wasser aus dem Porensystem des Aerogels möglich ist.

Durch die Verwendung von Polysiloxanen, Silikonaten und Silanen als Hydrophobierungsmittel scheint eine besonders gleichmäßige Einarbeitung in das sich bildende Gelmaterial, insbesondere in Silica-Hydrogele, möglich zu sein, wodurch eine wirkungsvolle Oberflächenmodifizierung sämtlicher, d. h. auch innerer Oberflächen, des Gels erreicht werden kann. Dieser Effekt ist insbesondere bei Silanen besonders ausgeprägt.

Wenn im Rahmen der vorliegenden Erfindung ein Polysiloxan als Hydrophobierungsmittel eingesetzt wird, so kann die chemische Zusammensetzung des Polysiloxans in weiten Bereichen variieren. Besonders gute Ergebnisse werden jedoch erhalten, wenn ein Polysiloxan mit reaktiven funktionellen Gruppen, insbesondere ausgewählt aus Hydroxyfunktionen, Aminen und/oder Carbonsäuren, verwendet wird. Gleichfalls werden besonders gute Ergebnisse erreicht, wenn ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird.

Wenn im Rahmen der vorliegenden Erfindung ein Silan als Hydrophobierungsmittel eingesetzt wird, so kann dessen chemische Natur gleichfalls in weiten Bereichen variieren. Besonders gute Ergebnisse werden jedoch erhalten, wenn ein Silan der allgemeinen Formel I

R¹ₙSiR²₄₋ₙ (I)

mit
- n: = 1 bis 3, insbesondere 1 oder 2, vorzugsweise 1;
- R¹: = C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl;
- R²: = Halogenid, insbesondere Chlorid, Bromid und/oder lodid, OX mit X = Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird.

Für den Fall, dass im Rahmen der vorliegenden Erfindung ein Silikonat als Hydrophobierungsmittel eingesetzt wird, so kann eine Vielzahl von Silikonaten verwendet werden. Besonders gute Ergebnisse werden jedoch erhalten, wenn ein als Silikonat der allgemeinen Formel II

HO-[Si(R)(OM)-O-]ₙH (II)

mit
- n: = 1 bis 6, insbesondere 1 bis 3, vorzugsweise 1;
- R: = C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
- M: = einwertiges Metall, insbesondere Alkalimetall, vorzugsweise Natrium oder Kalium;
eingesetzt wird. In diesem Zusammenhang hat es sich bewährt, wenn das Hydrophobierungsmittel ausgewählt ist aus Natriummethylsilikonat, Kaliummethylsilikonat, Natriumpropylsilikonat und Kaliumpropylsilikonat.

Im Rahmen der vorliegenden Erfindung wird zur Durchführung des Verfahrens nur ein Löse- oder Dispersionsmittel verwendet. Unter einem Löse- oder Dispersionsmittel sind dabei im Rahmen der vorliegenden Erfindung flüssige Medien zu verstehen, welche imstande sind, chemische Verbindungen, insbesondere Salze zu lösen bzw. zu dispergieren. Lösemittel bewirken dabei eine Trennung einzelner Bestandteile chemischer Stoffe, d. h. die Stoffe werden auf molekularer Ebene in Einzelmoleküle bzw. in einzelne Bestandteile, wie beispielsweise Ionen getrennt und dann in Lösungen überführt, wobei die einzelnen Bestandteile dauerhaft separiert bleiben und makroskopisch und mikroskopisch als homogenes Einphasensystem wirken. Unter einer Dispersion ist im Rahmen der vorliegenden Erfindung ein Zweiphasengemisch zu verstehen, bei welchem eine erste Phase mit dem zu dispergierenden Stoff, die sogenannte diskontinuierliche Phase, in einer zweiten Phase, dem Dispersionsmittel bzw. der kontinuierlichen Phase, feinverteilt, insbesondere homogen verteilt, vorliegt. Der Übergang von Lösungen zu Dispersionen ist jedoch fließend, so können beispielsweise kolloidale Lösungen weder eindeutig den Lösungen noch den Dispersionen zugerechnet werden. Auch bei "Lösungen" von hochpolymeren Makromolekülen ist nicht eindeutig bestimmbar, ob eine Lösung oder eine Dispersion vorliegt.

Die Verwendung nur eines Lösemittels im Verlauf des erfindungsgemäßen Verfahrens vereinfacht die Verfahrensführung ganz erheblich, da bei der Herstellung von Aerogelen, insbesondere von Silica-Aerogelen, oftmals mehrere Lösemittelwechsel vorgenommen werden müssen. Ein häufigerer Lösungsmittelwechsel führt einerseits zu einem verfahrenstechnisch erhöhten Aufwand, andererseits wird auch die Entsorgung der Lösemittelreste bzw. Dispersionsmittelreste deutlich erschwert, da diese oftmals getrennt gesammelt und entsorgt werden müssen.

Im Allgemeinen wird im Rahmen der vorliegenden Erfindung als Löse- oder Dispersionsmittel ein polares Löse- oder Dispersionsmittel, insbesondere ein polares protisches Löse- oder Dispersionsmittel, verwendet.

Erfindungsgemäß ist das Löse- oder Dispersionsmittel Wasser. Ein Vorteil der Verwendung von Wasser ist, dass es weder giftig noch umweltproblematisch bedenklich ist. Darüber hinaus ist Wasser nicht brennbar und problemlos zu entsorgen.

Üblicherweise wird im Rahmen der vorliegenden Erfindung das Sol aus einer Lösung oder Dispersion eines Prekursors hergestellt. In diesem Zusammenhang hat es sich bewährt, wenn die Lösung oder Dispersion den Prekursor, in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält. In den zuvor genannten Konzentrationsbereichen wird eine besonders gleichmäßige Polymerisation bzw. Kondensation der Solmoleküle bzw. -partikel erreicht, so dass ein besonders homogenes Gel, insbesondere Hydrogel, erhalten wird.

Das Sol kann im Rahmen der vorliegenden Erfindung aus einer Vielzahl von möglichen Prekursorverbindungen hergestellt werden. Besonders gute Ergebnisse werden jedoch erhalten, wenn ein Hydrosol auf Basis von Monokieselsäure und/oder kolloidaler Kieselsäure aus Alkalisilikat-Lösung, insbesondere Natriumsilikat-Lösung, als Prekursor hergestellt wird. Im Rahmen der vorliegenden Erfindung werden bevorzugt Silica-Aerogele hergestellt, da diese insbesondere für Dämmzwecke geeignete physikalische Eigenschaften besitzen.

Wenn im Rahmen der vorliegenden Erfindung das Hydrosol aus einer Alkalisilikatlösung hergestellt wird, so hat es sich bewährt, wenn das Hydrosol durch Umsetzung der Alkalisilikatlösung mit Mineralsäuren, insbesondere Salzsäure, Salpetersäure und/oder Schwefelsäure, oder durch lonenaustausch, vorzugsweise durch lonenaustausch, hergestellt wird. Besonders gute Ergebnisse werden in diesem Zusammenhang erhalten, wenn der lonenaustausch mit einem stark sauren Kationenaustauscherharz, insbesondere einem sulfonierten Polystyrolharz, vorzugsweise einem sulfonierten divinylbenzolvernetzten Polystyrolharz, durchgeführt wird. Die Verwendung von Ionenaustauschern, insbesondere auf Basis von sulfonierten divinylbenzolvernetzten Polystyrolharzen, führt zu besonders reinen Hydrosolen, welche nahezu frei sind von Salzen, insbesondere störenden Ionen, welche die Polymerisation des Aerogels behindern bzw. zu Fehlstellen führen.

Im Rahmen der vorliegenden Erfindung hat es sich bewährt, wenn das Sol einen pH-Wert im Bereich von 1 bis 6, insbesondere 2 bis 4, vorzugsweise 2 bis 3, aufweist. Gleichermaßen werden im Rahmen der vorliegenden Erfindung gute Ergebnisse erhalten, wenn das Sol einen pH-Wert von weniger als 6, insbesondere weniger als 4, insbesondere weniger als 3, aufweist. Mit den vorgenannten pH-Werten wird eine besonders homogene Verteilung von nach Möglichkeit niedermolekularen Solmolekülen bzw. -partikeln erzielt.

Darüber hinaus ist im Rahmen der vorliegenden Erfindung vorteilhaft, wenn das Sol eine Leitfähigkeit bei 20 °C von höchstens 1.200 µS/cm, insbesondere höchstens 1.100 µS/cm, vorzugsweise höchstens 1.000 µS/cm, aufweist. Gleichfalls werden besonders gute Ergebnisse erhalten, wenn das Sol eine Leitfähigkeit bei 20°C im Bereich von 10 bis 1.200 µS/cm, insbesondere 20 bis 1.100 µS/cm, vorzugsweise 30 bis 1.000 µS/cm, aufweist. Geringe Leitfähigkeitswerte zeigen an, dass das Sol weitgehend frei ist von Ionen, insbesondere von Fremdionen, welche die anschließende Polymerisation bzw. Kondensation zum Gel negativ beeinflussen.

Üblicherweise wird Verfahrensschritt (a) bei Raumtemperatur oder in einem Temperaturbereich von 20 bis 30 °C durchgeführt.

Gemäß einer bevorzugten Ausführungsform der vorliegenden Erfindung wird in Verfahrensschritt (b), insbesondere zu Beginn von Verfahrensschritt (b), der pH-Wert der Lösung oder Dispersion, insbesondere des in Verfahrensschritt (a) erhaltenen Sols, im Bereich von 3,5 bis 7, insbesondere 3,5 bis 6,5, vorzugsweise 4 bis 6, eingestellt. Im vorgenannten Bereich findet eine besonders gleichmäßige und kontrollierte Polymerisation bzw. Kondensation des Sols zum Gel, insbesondere von Silica-Hydrosolen zu Hydrogelen, statt. Was nun die Einstellung des pH-Wertes in Verfahrensschritt (b) anbelangt, so kann diese auf vielfältige Art und Weise geschehen. Besonders gute Ergebnisse werden im Rahmen der vorliegenden Erfindung jedoch erhalten, wenn der pH-Wert durch Zugabe einer Base, insbesondere durch Zugabe von Natronlauge, Kalilauge und/oder wässriger Ammoniak-Lösung, vorzugsweise wässriger Ammoniak-Lösung, eingestellt wird. Die Verwendung von Ammoniak-Lösung hat insbesondere den Vorteil, dass die entstehenden Ammoniumionen die Polymerisation bzw. Kondensation des Sols zum Gel nicht negativ beeinflussen und darüber hinaus nicht in die Gelstruktur eingebaut werden, wie beispielsweise Natrium- oder Kaliumionen.

Gleichfalls kann es vorgesehen sein, dass der pH-Wert durch Zugabe von Säure, insbesondere einer Mineralsäure, vorzugsweise Salzsäure, eingestellt wird. Eine Einstellung des pH-Werts durch Zugabe von Säuren ist insbesondere kann insbesondere notwendig sein, wenn stark basische Hydrophobierungsmittel, wie beispielsweise Silikonate, verwendet werden.

Im Allgemeinen wird das Hydrophobierungsmittel im Rahmen der vorliegenden Erfindung in Form einer Lösung oder Dispersion, insbesondere einer wässrigen Lösung oder Dispersion, eingesetzt. Was in diesem Zusammenhang die Konzentration des Hydrophobierungsmittels in der Lösung oder Dispersion anbelangt, so kann diese in weiten Bereichen variieren. Besonders gute Ergebnisse werden jedoch erhalten, wenn die Lösung oder Dispersion das Hydrophobierungsmittel in Mengen von 1 bis 90 Gew.-%, insbesondere 10 bis 80 Gew.-%, vorzugsweise 30 bis 70 Gew.-%, bevorzugt 40 bis 60 Gew.-%, bezogen auf die Lösung oder Dispersion des Hydrophobierungsmittels, enthält.

Besonders gute Ergebnisse werden im Rahmen der vorliegenden Erfindung erhalten, wenn das gewichtsbezogene Verhältnis von Solpartikeln zu Hydrophobierungsmittel im Bereich von 10 : 1 bis 1 : 20, insbesondere 5: 1 bis 1 : 10, vorzugsweise 3: 1 bis 1 : 5, bevorzugt 2 : 1 bis 1 : 4, besonders bevorzugt 1 : 1 bis 1 : 3, variiert wird. In den vorgenannten Verhältnissen werden besonders stabile Aerogele erhalten, welche durch Trocknen problemlos von Lösemittelresten bzw. Dispersionsmittelresten, insbesondere Wasser, befreit werden können. Unter Solpartikeln sind dabei die gelösten bzw. dispergierten Teilchen des Sols, insbesondere der Kieselsäure, zu verstehen.

Die Zugabe des Hydrophobierungsmittels in Verfahrensschritt (b) erfolgt üblicherweise nach Einstellung des pH-Wertes. Hierbei wird es bevorzugt, wenn die Zugabe des Hydrophobierungsmittels insbesondere 0,1 bis 60 min, vorzugsweise 0,5 bis 30 min, bevorzugt 0,5 bis 15 min, nach Einstellung des pH-Wertes erfolgt. Die Zugabe des Hydrophobierungsmittels sollte zeitnah nach Einstellung des pH-Wertes und somit nach Beginn der Polymerisations- bzw. Kondensationsreaktion der Solpartikel erfolgen. Bei einer Zugabe im vorgenannten Zeitraum sind zwar schon einige größere Aggregate der dispergierten bzw. gelösten Solpartikel gebildet, jedoch ist die Polymerisation noch nicht derart fortgeschritten, dass ein homogener bzw. gleichmäßiger Einbau des Hydrophobierungsmittel in die Grenzflächen der entstehenden Hydrogelpartikel nicht mehr möglich wäre. Es ist auch möglich, den pH-Wert nach Zugabe des Hydrophobierungsmittels einzustellen, was insbesondere bei Verwendung basischer Hydrophobierungsmittel bevorzugt wird, um den pH-Wert vorzugsweise im schwach sauren Bereich einzustellen.

Gleichermaßen hat es sich im Rahmen der vorliegenden Erfindung als vorteilhaft erwiesen, wenn die Zugabe des Hydrophobierungsmittels zu dem Sol innerhalb eines Zeitraums von weniger als 15 Minuten, insbesondere weniger als 10 Minuten, vorzugsweise weniger als 5 Minuten, beendet ist.

Was die Temperatur anbelangt, bei welcher das Hydrophobierungsmittel mit dem Sol gemischt werden kann, so kann diese naturgemäß in weiten Bereichen variieren. Es hat sich jedoch bewährt, wenn die Zugabe des Hydrophobierungsmittels zu dem Sol bei Temperaturen im Bereich von 10 bis 40 °C, insbesondere 20 bis 30 °C, erfolgt. Im Rahmen der vorliegenden Erfindung kann die Zugabe des Hydrophobierungsmittels zu dem Sol somit bei Raumtemperatur erfolgen.

Gemäß einer bevorzugten Ausführungsform der vorliegenden Erfindung wird in Verfahrensschritt (b) nach Zugabe des Hydrophobierungsmittels die Mischung auf Temperaturen im Bereich von 30 bis 90 °C, insbesondere 35 bis 85 °C, vorzugsweise 40 bis 80 °C, bevorzugt 50 bis 75 °C, besonders bevorzugt 60 bis 70 °C, erwärmt. In den zuvor genannten Temperaturbereichen wird die Kondensationsreaktion der Solpartikel so weit beschleunigt, dass eine rasche Gelbildung erfolgt, jedoch vollzieht sich die Gelbildung langsam genug, um eine möglichst gleichmäßige und homogene poröse Oberflächenstruktur auszubilden.

Was die Dauer angelangt, bei welcher die Mischung bei der erhöhten Temperatur gehalten wird, so kann diese gleichfalls in weiten Bereichen variieren. Es hat sich jedoch im Rahmen der vorliegenden Erfindung bewährt, wenn die Mischung für 0,1 bis 48 Stunden, insbesondere 0,5 bis 35 Stunden, vorzugsweise 1 bis 24 Stunden, bevorzugt 1 bis 12 Stunden, besonders bevorzugt 2 bis 8 Stunden, bei der erhöhten Temperatur gehalten wird. Gleichfalls werden besonders gute Ergebnisse erhalten, wenn die Mischung für weniger als 48 Stunden, insbesondere weniger als 35 Stunden, vorzugsweise weniger als 24 Stunden, bevorzugt weniger als 12 Stunden, besonders bevorzugt weniger als 8 Stunden, bei der erhöhten Temperatur gehalten wird.

Erfindungsgemäß wird in einem auf Verfahrensschritt (b) folgenden Verfahrensschritt (c) das in Verfahrensschritt (b) erhaltene Hydrogel zu einem Aerogel verarbeitet. In diesem Zusammenhang kann es im Rahmen der vorliegenden Erfindung insbesondere vorgesehen sein, dass das in Verfahrensschritt (b) erhaltene Hydrogel isoliert, nachfolgend gegebenenfalls zerkleinert und anschließend getrocknet wird.

Die Isolierung des Gels kann dabei auf beliebige Art und Weise, beispielsweise durch Dekantieren des Löse- bzw. Dispersionsmittels oder durch Filtration, erfolgen. In Abhängigkeit von den gewählten Verfahrensbedingungen ist es jedoch möglich, dass nur geringe Mengen an Lösemittel oder sogar kein freies Lösemittel anfällt. Das in Verfahrensschritt (b) erhaltene Hydrogel wird dann durch Entfernen aus dem Reaktionsgefäß isoliert, gegebenenfalls zerkleinert und anschließend getrocknet.

Gemäß dieser besonderen Ausführungsform kann es vorgesehen sein, dass in Verfahrensschritt (c) das Gel auf absolute Partikelgrößen im Bereich von 0,01 bis 10 mm, insbesondere 0,1 bis 8 mm, vorzugsweise 0,3 bis 7 mm, bevorzugt 0,5 bis 5 mm, zerkleinert wird. Die Zerkleinerung kann dabei durch beliebige geeignete Methoden erfolgen, beispielsweise durch Schneiden oder Zerhacken mit Messern oder mit Drahtgittern. Die Zerkleinerung des Hydrogels ist üblicherweise unproblematisch, da es in Form einer hochviskosen pastösen Masse erhalten wird. Es hat sich jedoch bewährt, wenn das Hydrogel für einen Zeitraum von 1 bis 5 Stunden, insbesondere 1,5 bis 4 Stunden, vorzugsweise 2 bis 3 Stunden, vorgetrocknet wird, insbesondere bei Raumtemperatur an der Luft. Diese Zeitspanne wird oftmals benötigt, um dem Hydrogel beim Zerkleinern die notwendige Festigkeit und Formstabilität zu verleihen, welche zur Ausbildung diskreter Teilchen bzw. Partikel notwendig ist.

Üblicherweise wird im Rahmen der vorliegenden Erfindung in Verfahrensschritt (c) das Gel einer ein- oder mehrstufigen Trocknung unterworfen.

Was nun die Trocknung des Gels in Verfahrensschritt (c) anbelangt, so kann diese auf vielfältige Art und Weise durchgeführt werden, wobei die Poren- bzw. Festkörperstruktur des Hydrogels bzw. des resultierenden Aerogels während der Trocknung nicht durch das Wirken starker Kapillarkräfte zerstört werden darf. Im Rahmen der vorliegenden Erfindung werden besonders gute Ergebnisse erhalten, wenn das Hydrogel mittels überkritischer Trocknung, Gefriertrocknung, thermischer Trocknung oder Kombinationen der vorgenannten Trocknungsverfahren getrocknet wird.

Bei einer überkritischen Trocknung wird das Lösemittel im überkritischen Bereich aus dem Hydrogel entfernt bzw. das ursprüngliche Lösemittel gegen flüssiges Kohlendioxid ausgetauscht, welches anschließend unter überkritischen Bedingungen entfernt wird. Bei einer Gefriertrocknung wird üblicherweise das in Verfahrensschritt (b) erhaltene Hydrogel insbesondere nach vorhergehender Zerkleinerung, durch Einwirkung von flüssigem Stickstoff rasch gekühlt und das Lösemittel, insbesondere Wasser, anschließend unter vermindertem Druck durch Sublimation entfernt. Bei der thermischen Trocknung wird das Lösemittel durch Temperaturerhöhung aus der Poren- bzw. Festkörperstruktur des Hydrogels bzw. des resultierenden Aerogels entfernt, wobei dieser Verfahrensschritt auch unter vermindertem Druck stattfinden kann.

Im Rahmen der vorliegenden Erfindung wird es bevorzugt, wenn das Hydrogel einer einstufigen thermischen Trocknung unterworfen wird. Durch das spezielle erfindungsgemäße Verfahren ist es somit möglich, das Lösemittel, insbesondere Wasser, aus dem Porensystem des Hydrogels durch Erwärmen des Gels zu entfernen. Eine einstufige thermische Trocknung ist insbesondere unter Normaldruck, d. h. Umgebungsdruck, technisch besonders einfach durchführbar und mit einem geringen apparativen Aufwand verbunden. Es hat sich dabei im Rahmen der vorliegenden Erfindung bewährt, wenn die Trocknung des Aerogels in einer Klimakammer oder einem Ofen durchgeführt wird, um konstante Trocknungsbedingungen zu garantieren.

Was nun die konkreten Verfahrensbedingungen bei der einstufigen thermischen Trocknung des Hydrogels in Verfahrensschritt (c) anbelangt, so können diese naturgemäß in weiten Bereichen variieren. Besonders gute Ergebnisse werden jedoch erhalten, wenn das Gel bei Temperaturen im Bereich von 20 bis 180 °C, insbesondere 30 bis 150 °C, vorzugsweise 40 bis 120 °C, bevorzugt 50 bis 100 °C, getrocknet wird.

Auch die Dauer der Trocknung kann in weiten Bereichen variieren. Es hat sich allerdings bewährt, wenn das Gel für eine Dauer von 5 bis 72 Stunden, insbesondere 10 bis 60 Stunden, vorzugsweise 24 bis 48 Stunden, getrocknet wird. Die vorgenannten Zeiträume sind für eine vollständige Entfernung des Lösemittels ausreichend, jedoch auch notwendig.

Durch die Hydrophobierung des Gels während der Bildung des Gels, insbesondere durch eine *in situ*-Hyrophobierung, ist es im Rahmen der vorliegenden Erfindung möglich, selbst flüssiges Wasser aus dem Kapillarsystem des Hydrogels zu entfernen und so weitgehend zerstörungsfrei zu einem Aerogel zu gelangen. Dies wird möglich, da durch die Hydrophobierung, insbesondere die *in situ*-Hydrophobierung, die Kapillarkräfte im Inneren des Gels, d. h. die Wechselwirkungen zwischen der Oberfläche des Gels und den Molekülen des Löse- bzw. Dispersionsmittels, dermaßen geschwächt sind, dass selbst flüssiges Wasser problemlos entfernt werden kann.

Gemäß einer gleichfalls vorteilhaften Ausführungsform der vorliegenden Erfindung ist es vorgesehen, dass in Verfahrensschritt (c) das Hydrogel einer mehrstufigen, insbesondere zweistufigen, Trocknung unterworfen wird.

Hierbei ist es bevorzugt, wenn in einer ersten Stufe der Trocknung das Hydrogel bei Temperaturen im Bereich von 10 bis 60 °C, insbesondere 20 bis 50 °C, vorzugsweise 30 bis 40 °C, getrocknet wird. Diese Trocknung kann vorteilhafterweise für eine Dauer von 8 bis 72 Stunden, insbesondere 12 bis 60 Stunden, vorzugsweise 20 bis 48 Stunden, durchgeführt werden. Das Hydrogel kann an der Raumluft oder aber vorteilhafterweise in einer Klimakammer, welche besonders konstante Trocknungsbedingungen gewährleistet, getrocknet werden.

Im Rahmen der vorliegenden Erfindung hat es sich darüber hinaus bewährt, wenn in einer zweiten Stufe der Trocknung das Hydrogel bei Temperaturen im Bereich von 60 bis 275 °C, insbesondere 80 bis 250 °C, vorzugsweise 100 bis 230 °C, bevorzugt 150 bis 200 °C, getrocknet wird. In diesem Zusammenhang kann es insbesondere vorgesehen sein, dass die zweite Stufe der Trocknung bei Temperaturen bis zu 275 °C, insbesondere bis zu 250 °C, vorzugsweise bis zu 230 °C, bevorzugt bis zu 200 °C, durchgeführt wird. Hierbei hat es sich bewährt, wenn die zweite Stufe der Trocknung für eine Dauer von 0,2 bis 10 Stunden, insbesondere 0,5 bis 5 Stunden, vorzugsweise 1 bis 2 Stunden, durchgeführt wird.

Die zuvor beschriebene mehrstufige thermische Trocknung eignet sich insbesondere zur Trocknung besonders empfindlicher und mechanisch weniger belastbarer Aerogele. Durch die langsame Entfernung eines Großteils des Löse- bzw. Dispersionsmittels, insbesondere flüssigen Wassers, während des ersten Teilschritts des Trocknungsverfahrensschrittes und einer anschließenden kurzzeitigen Erwärmung auf höhere Temperaturen, ist es möglich, das Löse- bzw. Dispersionsmittel, insbesondere Wasser, sehr schonend aus den Strukturen des Aerogels zu entfernen.

Wie zuvor bereits ausgeführt, ist es im Rahmen der vorliegenden Erfindung jedoch üblicherweise ausreichend, das Hydrogel bzw. das Aerogel durch eine einstufige thermische Trocknung vom Lösemittel, insbesondere Wasser, zu befreien, da im Rahmen der vorliegenden Erfindung durch die Hydrophobierung, insbesondere die *in situ*-Hydrophobierung, die Wechselwirkungen zwischen polaren Lösemitteln, insbesondere Wasser, und der Oberfläche des Gels, insbesondere des Hydrogels, dermaßen herabgesetzt wird, dass trotz der feinen und fragilen Porenstruktur des Gels, insbesondere des Hydrogels, eine Entfernung des Lösemittels ohne Zerstörung der Porenstruktur und somit des Aerogels möglich ist.

Das erfindungsgemäße Verfahren erlaubt eine besonders schonende Trocknung von nach dem Sol-Gel-Verfahren hergestellten Gelen, wodurch Aerogele erhalten werden. Der erfindungsgemäße Trocknungsverfahrensschritt erlaubt es weiterhin, selbst Wasser unter milden Bedingungen aus Silica-Aerogelen zu entfernen, wobei das Aerogel während des Trocknungsprozesses einer nur geringen und darüber hinaus reversiblen Schrumpfung ausgesetzt ist und die Struktur der Aerogelpartikel nicht zerstört wird.

Nachfolgend wird ein Aerogel beschrieben, welches durch das zuvor beschriebene Verfahren erhältlich ist.

Im Allgemeinen weist das Aerogel absolute Partikelgrößen von 0,01 bis 10 mm, insbesondere 0,1 bis 8 mm, vorzugsweise 0,3 bis 7 mm, bevorzugt 0,5 bis 5 mm, auf.

Weiterhin kann es vorgesehen sein, dass das Aerogel eine Schüttdichte von 0,05 bis 0,30 g/cm³, insbesondere 0,08 bis 0,25 g/cm³, vorzugsweise 0,10 bis 0,22 g/cm³, bevorzugt 0,12 bis 0,20 g/cm³, aufweist.

Was die Porosität des Aeorogels anbelangt, so weist dieses üblicherweise einen mittleren Porendurchmesser von 10 bis 300 nm, insbesondere 40 bis 250 nm, vorzugsweise 60 bis 220 nm, bevorzugt 100 bis 200 nm, auf. Gleichfalls kann es vorgesehen sein, dass das Aerogel einen mittleren Porendurchmesser von weniger als 300 nm, insbesondere weniger als 250 nm, vorzugsweise weniger als 220 nm, bevorzugt weniger als 200 nm, besitzt.

Üblicherweise weist das mit dem erfindungsgemäßen Verfahren erhältliche Aerogel ein Kontaktwinkel mit Wasser im Bereich von 100 bis 170°, insbesondere 130 bis 165°, vorzugsweise 140 bis 165° auf.

Das mit dem erfindungsgemäßen Verfahren erhältliche Aerogel eignet sich insbesondere speziell zur Einarbeitung in Dämmstoffe und Dämmmaterialien, insbesondere zur Wärme- und Schallisolierung bzw. zu Dämmzwecken. Insbesondere eignet sich das Aerogel in besonderer Weise zur Verwendung beispielsweise in Dämmputzen, welche besondere Anforderungen an die mechanische Belastbarkeit der Aerogelpartikel stellen, da insbesondere bei maschinellem Auftrag des Dämmputzes mittels Putzmaschinen der Dämmputz einem Druck von 7 bis 8 bar ausgesetzt sein kann.

Der Gegenstand der vorliegenden Erfindung wird nunmehr durch die nachfolgenden Ausführungsbeispiele verdeutlicht, wobei diese den Gegenstand der vorliegenden Erfindung exemplarisch beschreiben, ohne in irgendeiner Weise beschränkend zu wirken.

### Ausführungsbeispiele

### Verfahren zur Herstellung eines Aerogels

Im Folgenden wird die Synthese eines Silica-Aerogels mit Hilfe des erfindungsgemäßen Verfahrens beschrieben.

### 1. Herstellung eines Hydrosols

Eine kommerzielle Natrium-Silikat-Lösung wird mit deionisiertem Wasser auf ca. 5 Gew.-% Natrium-Silikat, bezogen auf das Gesamtgewicht der Lösung, verdünnt und durch ein stark saures Kationen-Austauscherharz auf Basis von sulfoniertem und divinylbenzolvernetztem Polysterol geleitet. Als Reaktionsprodukt wird ein Hydrosol erhalten, welches eine Leitfähigkeit von ca. 900 µS/cm aufweist. Die Natriumionen des Silikats sind folglich nahezu vollständig durch Protonen ersetzt.

### 2. Herstellung eines Hydrogels

Das in Verfahrensschritt 1 erhaltene Hydrosol wird mit wässriger Ammoniaklösung auf einen pH-Wert von 3 eingestellt. Unmittelbar im Anschluss wird das Sol mit einer Dispersion von 50 Gew.-% Octyltriethoxysilan in Wasser versetzt, wobei ein gewichtsbezogenes Verhältnis von gelösten Solpartikeln, d. h. Orthokieselsäure zu Silan von 1 : 3 eingestellt wird. Das Gemisch wird anschließend auf eine Temperatur von 60 °C erwärmt und für 7 Stunden auf dieser Temperatur gehalten, wobei sich ein Hydrogel in Form einer zähflüssigen pastösen Masse bildet.

### 3. Herstellung des Aerogels

Das in Verfahrensschritt 2 erhaltene Hydrogel wird durch Filtration von überschüssigem Wasser getrennt und auf einer Platte ausgegossen. Das Hydrogel trocknet nun ca. 3 Stunden bei Raumtemperatur und wird anschließend mittels eines Gitters auf Partikelgrößen im Bereich von 0,5 bis 5 mm zerkleinert. Die so erhaltenen formstabilen Hydrogelpartikel werden anschließend 41 Stunden bei 85 °C in einer Klimakammer getrocknet.

Es wird ein Aerogel mit folgenden Eigenschaften erhalten:

| | |
|---|---|
| Partikelgröße: | 0,5 bis 5 mm |
| Dichte: | 0,15 bis 0,16 g/cm³ |
| Kontaktwinkel: | > 130° |
| Wärmeleitfähigkeit: | 0,019 bis 0,025 W/(mK) |
| Porendurchmesser: | 100 bis 200 nm |
| Lichtdurchlässigkeit: | keine |

Das erhaltene Aerogel eignet sich in hervorragender Weise als Dämmstoff sowie zur Einarbeitung in Dämmputze. Darüber hinaus werden während der Synthese des Aerogels keine gesundheitsschädlichen, giftigen oder brennbaren Stoffe eingesetzt.

## Patentansprüche

1. Verfahren zur Herstellung von Silica-Aerogelen,
**dadurch gekennzeichnet,**
**dass**
(a) in einem ersten Verfahrensschritt ein Hydrosol hergestellt wird; und
(b) in einem nachfolgenden zweiten Verfahrensschritt das Hydrosol in Gegenwart mindestens eines Hydrophobierungsmittels zu einem Hydrogel umgesetzt wird, wobei das Hydrophobierungsmittel ausgewählt ist aus Silanen, Polysiloxanen und Silikonaten sowie deren Mischungen, und
(c) in einem auf Verfahrensschritt (b) folgenden Verfahrensschritt (c) das in Verfahrensschritt (b) erhaltene Hydrogel zu einem Aerogel verarbeitet wird, wobei das in Verfahrensschritt (b) erhaltene Hydrogel isoliert, nachfolgend gegebenenfalls zerkleinert und anschließend getrocknet wird,
wobei zur Durchführung des Verfahrens nur ein Löse- oder Dispersionsmittel verwendet wird, wobei das Löse- oder Dispersionsmittel Wasser ist.

2. Verfahren nach Anspruch 1, **dadurch gekennzeichnet, dass** ein Polysiloxan mit reaktiven funktionellen Gruppen, insbesondere ausgewählt aus Hydroxyfunktionen, Aminen und/oder Carbonsäuren, eingesetzt wird und/oder dass ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird.

3. Verfahren nach Anspruch 1 oder 2, **dadurch gekennzeichnet, dass** ein Silan der allgemeinen Formel I
R¹ₙSiR²₄₋ₙ (I)
mit
n = 1 bis 3, insbesondere 1 oder 2, vorzugsweise 1;
R¹ = C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl;
R² = Halogenid, insbesondere Chlorid, Bromid und/oder lodid, OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird.

4. Verfahren nach einem der Ansprüche 1 bis 3, **dadurch gekennzeichnet, dass** ein Silikonat der allgemeinen Formel II
HO-[Si(R)(OM)-O-]ₙH (II)
mit
n = 1 bis 6, insbesondere 1 bis 3, vorzugsweise 1;
R = C₁- bis C-₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
M = einwertiges Metall, insbesondere Alkalimetall, vorzugsweise Natrium oder Kalium;
eingesetzt wird.

5. Verfahren nach einem der Ansprüche 1 bis 4, **dadurch gekennzeichnet, dass** das Hydrosol aus einer Lösung oder Dispersion mindestens eines Prekursors hergestellt wird, insbesondere wobei die Lösung oder Dispersion den Prekursor in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält.

6. Verfahren nach Anspruch 5, **dadurch gekennzeichnet, dass** in Verfahrensschritt (a) ein Hydrosol auf Basis von Monokieselsäure und/oder kolloidaler Kieselsäure aus einer Alkalisilikat-Lösung, insbesondere Natriumsilikat-Lösung, als Prekursor hergestellt wird.

7. Verfahren nach einem der vorangehenden Ansprüche, **dadurch gekennzeichnet, dass** das Hydrosol einen pH-Wert im Bereich von 1 bis 6, insbesondere 2 bis 4, vorzugsweise 2 bis 3, aufweist und/oder dass das Hydrosol eine Leitfähigkeit bei 20 °C im Bereich von 10 bis 1.200 µS/cm, insbesondere 20 bis 1.100 µS/cm, vorzugsweise 30 bis 1.000 µS/cm, aufweist.

8. Verfahren nach einem der vorangehenden Ansprüche, **dadurch gekennzeichnet, dass** Verfahrensschritt (a) bei Raumtemperatur, insbesondere in einem Temperaturbereich von 20 bis 30 °C, durchgeführt wird.

9. Verfahren nach einem der vorangehenden Ansprüche, **dadurch gekennzeichnet, dass** in Verfahrensschritt (b), insbesondere zu Beginn von Verfahrensschritt (b), der pH-Wert der Lösung oder Dispersion, insbesondere des in Verfahrensschritt (a) erhaltenen Hydrosols, im Bereich von 3,5 bis 7, insbesondere 3,5 bis 6,5, vorzugsweise 4 bis 6, eingestellt wird, insbesondere wobei der pH-Wert durch Zugabe einer Base, insbesondere Natronlauge, Kalilauge und/oder wässriger Ammoniak-Lösung, vorzugsweise wässriger Ammoniak-Lösung, eingestellt wird und/oder insbesondere wobei der pH-Wert durch Zugabe einer Säure, insbesondere einer Mineralsäure, vorzugsweise Salzsäure, eingestellt wird.

10. Verfahren nach einem der vorangehenden Ansprüche, **dadurch gekennzeichnet, dass** das Hydrophobierungsmittel in Form einer Lösung oder Dispersion eingesetzt wird, insbesondere wobei die Lösung oder Dispersion das Hydrophobierungsmittel in Mengen von 1 bis 90 Gew.-%, insbesondere 10 bis 80 Gew.-%, vorzugsweise 30 bis 70 Gew.-%, bevorzugt 40 bis 60 Gew.-%, bezogen auf die Lösung oder Dispersion des Hydrophobierungsmittels, enthält.

11. Verfahren nach einem der vorangehenden Ansprüche, **dadurch gekennzeichnet, dass** das gewichtsbezogene Verhältnis von Solpartikeln zu Hydrophobierungsmittel im Bereich von 10 : 1 bis 1 : 20, insbesondere 5: 1 bis 1 : 10, vorzugsweise 3: 1 bis 1 : 5, bevorzugt 2 : 1 bis 1 : 4, besonders bevorzugt 1 : 1 bis 1 : 3, variiert wird.

12. Verfahren nach einem der vorangehenden Ansprüche, **dadurch gekennzeichnet, dass** in Verfahrensschritt (b) die Zugabe des Hydrophobierungsmittels nach Einstellung des pH-Wertes erfolgt, insbesondere 0,1 bis 60 min, vorzugsweise 0,5 bis 30 min, bevorzugt 0,5 bis 15 min, nach Einstellung des pH-Wertes

13. Verfahren nach einem der vorangehenden Ansprüche, **dadurch gekennzeichnet, dass** in Verfahrensschritt (b) die Mischung nach Zugabe des Hydrophobierungsmittels auf Temperaturen im Bereich von 30 bis 90 °C, insbesondere 35 bis 85 °C, vorzugsweise 40 bis 80 °C, bevorzugt 50 bis 75 °C, besonders bevorzugt 60 bis 70 °C, erwärmt wird.

14. Verfahren nach einem der vorangehenden Ansprüche, **dadurch gekennzeichnet, dass** in Verfahrensschritt (c) das Hydrogel auf absolute Partikelgrößen im Bereich von 0,01 bis 10 mm, insbesondere 0,1 bis 8 mm, vorzugsweise 0,3 bis 7 mm, bevorzugt 0,5 bis 5 mm, zerkleinert wird, insbesondere nachdem das Hydrogel vorgetrocknet wurde.

## Claims

1. A method for the production of silica aerogels,
**characterised in**
**that**
(a) in a first process step a hydrosol is produced; and
(b) in a subsequent second process step the hydrosol is converted into a hydrogel in the presence of at least one hydrophobic agent, wherein the hydrophobic agent is selected from silanes, polysiloxanes and siliconates and their compounds, and
(c) in a process step (c) following process step (b) the hydrogel obtained in process step (b) is processed into an aerogel, wherein the hydrogel obtained in process step (b) is isolated, subsequently crushed if necessary and then dried,
wherein only one solvent or dispersant is used to execute the method, wherein the solvent or dispersant is water.

2. The method according to claim 1, **characterised in that** a polysiloxane with reactive functional groups, particularly selected from hydroxy function, amines and/or carboxylic acids, is used and/or that a polysiloxane with a weight-average molecular mass M_{w} in the range of 250 to 50,000 g/mol, particularly 300 to 30,000 g/mol, preferably 400 to 20,000 g/mol, more preferably 450 to 10,000 g/mol, particularly preferably 500 to 5,000 g/mol, is used.

3. The method according to claim 1 or 2, **characterised in that** a silane of the general formula I
R¹ₙSiR²₄₋ₙ (I)
where
n = 1 to 3, particularly 1 or 2, preferably 1;
R¹ = C₁- to C₃₀-alkyl and/or C₆- to C₃₀-aryl, particularly C₂- to C₂₀-alkyl and/or C₆- to C₂₀-aryl, preferably C₃- to C₂₀-alkyl and/or C₆- to C₂₀-aryl, more preferably C₄- to C₁₅-alkyl and/or C₆- to C₁₅-aryl, particularly preferably C₅- to C₁₂-alkyl and/or C₆- to C₁₂-aryl, very particularly preferably C₅- to C₁₂-alkyl;
R² = halide, particularly chloride, bromide and/or iodide, OX with X = hydrogen, alkyl, aryl, polyether and/or carboxylic acid derivative, particularly alkyl, preferably C₁- to C₈-alkyl, more preferably C₂- to C₄-alkyl;
is used.

4. The method according to one of claims 1 to 3, **characterised in that** a siliconate of the general formula II
HO-[Si(R)(OM)-O-]ₙH (II)
where
n = 1 to 6, particularly 1 to 3, preferably 1;
R = C₁- to C₁₀-alkyl and/or C₆- to C-₁₅-aryl, particularly C₁- to C₈-alkyl and/or C₆- to C₁₂-aryl, preferably C₁- to C₆-akyl and/or C₆- to C₁₀-aryl, more preferably C₁- to C₄-alkyl, particularly preferably C₁- to C₃-alkyl;
M = monovalent metal, particularly alkaline metal, preferably sodium or potassium;
is used.

5. The method according to one of claims 1 to 4, **characterised in that** the hydrosol is produced from a solution or dispersion of at least one precursor, particularly wherein the solution or dispersion contains the precursor in quantities of 0.01 to 20 wt.-%, particularly 0.1 to 15 wt.-%, preferably 0.5 to 10 wt.-%, more preferably 0.75 to 8 wt.-%, in relation to the solution or dispersion.

6. The method according to claim 5, **characterised in that** in process step (a) a hydrosol is produced, as the precursor, on the basis of monosilicic acid and/or colloidal silicic acid from an alkaline silicate solution, particularly sodium silicate solution.

7. The method according to one of the preceding claims, **characterised in that** the hydrosol has a pH value in the range of 1 to 6, particularly 2 to 4, preferably 2 to 3, and/or that the hydrosol has a conductivity at 20 °C in the range of 10 to 1,200 µS/cm, particularly 20 to 1,100 µS/cm, preferably 30 to 1,000 µS/cm.

8. The method according to one of the preceding claims, **characterised in that** process step (a) is carried out at room temperature, particularly in a temperature range of 20 to 30 °C.

9. The method according to one of the preceding claims, **characterised in that** in process step (b), particularly at the beginning of process step (b), the pH value of the solution or dispersion, particularly of the hydrosol obtained in process step (a), is adjusted in the range of 3.5 to 7, particularly 3.5 to 6.5, preferably 4 to 6, particularly wherein the pH value is adjusted by adding a basis, particularly caustic soda, caustic lye and/or aqueous ammonia solution, preferably aqueous ammonia solution, and/or particularly wherein the pH value is adjusted by adding an acid, particularly a mineral acid, preferably hydrochloric acid.

10. The method according to one of the preceding claims, **characterised in that** the hydrophobic agent is used in the form of a solution or dispersion, particularly wherein the solution or dispersion contains the hydrophobic agent in quantities of 1 to 90 wt.-%, particularly 10 to 80 wt.-%, preferably 30 to 70 wt.-%, more preferably 40 to 60 wt.-%, in relation to the solution or dispersion of the hydrophobic agent.

11. The method according to one of the preceding claims, **characterised in that** the weight-related ratio of sol particles to hydrophobic agent varies in the range of 10 : 1 to 1 : 20, particularly 5 : 1 to 1 : 10, preferably 3 : 1 to 1 : 5, more preferably 2 : 1 to 1 : 4, particularly preferably 1 : 1 to 1 : 3.

12. The method according to one of the preceding claims, **characterised in that** in process step (b) the addition of the hydrophobic agent occurs after adjusting the pH value, particularly 0.1 to 60 min, preferably 0.5 to 30 min, more preferably 0.5 to 15 min, after adjusting the pH value.

13. The method according to one of the preceding claims, **characterised in that** in process step (b) the mixture after adding the hydrophobic agent is heated to temperatures in the range of 30 to 90 °C, particularly 35 to 85 °C, preferably 40 to 80 °C, more preferably 50 to 75 °C, particularly preferably 60 to 70 °C.

14. The method according to one of the preceding claims, **characterised in that** in process step (c) the hydrogel is crushed to absolute particle sizes in the range of 0.01 to 10 mm, particularly 0.1 to 8 mm, preferably 0.3 to 7 mm, more preferably 0.5 to 5 mm, particularly after the hydrogel has been pre-dried.

## Revendications

1. Procédé de préparation d'aérogels de silice,
**caractérisé en ce que**
(a) un hydrosol est préparé lors d'une première étape de procédé ; et
(b) lors d'une seconde étape de procédé subséquente, l'hydrosol est converti en un hydrogel en présence d'au moins un agent d'hydrophobisation, l'agent d'hydrophobisation étant choisi parmi des silanes, des polysiloxanes et des siliconates, ainsi que des mélanges de ceux-ci, et
(c) lors d'une étape de procédé (c) suivant l'étape de procédé (b), l'hydrogel obtenu lors de l'étape de procédé (b) est transformé en un aérogel, l'hydrogel obtenu lors de l'étape de procédé (b) étant isolé, éventuellement ensuite broyé et finalement séché,
sachant qu'au cours de la mise en oeuvre du procédé seul un agent dispersant ou solvant est utilisé, l'agent dispersant ou solvant étant l'eau.

2. Procédé selon la revendication 1, **caractérisé en ce qu'**un polysiloxane, comprenant des groupes fonctionnels réactifs, en particulier des groupes à fonctionnalité hydroxy, amine et/ou acide carboxylique, est utilisé et/ou **en ce qu'**un polysiloxane de masse moléculaire moyenne en poids M_{w} située dans la plage allant de 250 à 50 000 g/mol, en particulier de 300 à 30 000 g/mol, de préférence de 400 à 20 000 g/mol, de manière davantage préférée de 450 à 10 000 g/mol, de manière particulièrement préférée de 500 à 5 000 g/mol, est utilisé.

3. Procédé selon la revendication 1 ou 2, **caractérisé en ce qu'**un silane de formule générale I
R¹ₙSiR²₄₋ₙ (I)
dans laquelle
n = 1 à 3, en particulier 1 ou 2, de préférence 1 ;
R¹ = un alkyle en C₁-C₃₀ et/ou un aryle en C₆-C₃₀, en particulier un alkyle en C₂-C₂₀ et/ou un aryle en C₆-C₂₀, de préférence un alkyle en C₃-C₂₀ et/ou un aryle en C₆-C₂₀, de manière davantage préférée un alkyle en C₄-C₁₅ et/ou un aryle en C₆-C₁₅, de manière particulièrement préférée un alkyle en C₅-C₁₂ et/ou un aryle en C₆-C₁₂, de manière particulièrement préférée entre toutes un alkyle en C₅-C₁₂ ;
R² = un halogénure, en particulier un chlorure, un bromure et/ou un iodure, OX avec X = un hydrogène, un alkyle, un aryle, un polyéther et/ou un dérivé d'acide carboxylique, en particulier un alkyle, de préférence un alkyle en C₁-C₈, de manière davantage préférée un alkyle en C₂-C₄ ;
est utilisé.

4. Procédé selon l'une des revendications 1 à 3, **caractérisé en ce qu'**un siliconate de formule générale II
HO-[Si(R)(OM)-O-]ₙH (II)
dans laquelle
n = 1 à 6, en particulier 1 à 3, de préférence 1 ;
R = un alkyle en C₁-C₁₀ et/ou un aryle en C₆-C₁₅, en particulier un alkyle en C₁-C₈ et/ou un aryle en C₆-C₁₂, de préférence un alkyle en C₁-C₆ et/ou un aryle en C₆-C₁₀, de manière davantage préférée un alkyle en C₁-C₄, de manière particulièrement préférée un alkyle en C₁-C₃ ;
M = un métal monovalent, en particulier un métal alcalin, de préférence du sodium ou du potassium ;
est utilisé.

5. Procédé selon l'une des revendications 1 à 4, **caractérisé en ce que** l'hydrosol est préparé à partir d'une solution ou d'une dispersion d'au moins un précurseur, la solution ou la dispersion contenant en particulier le précurseur en une proportion allant d'au moins 0,01 à 20 % en poids, en particulier de 0,1 à 15 % en poids, de préférence de 0,5 à 10 % en poids, de manière davantage préférée de 0,75 à 8 % en poids, par rapport à la solution ou à la dispersion.

6. Procédé selon la revendication 5, **caractérisé en ce que**, lors de l'étape de procédé (a), un hydrosol à base d'un acide monosilicique et/ou d'un acide silicique colloïdal est préparé à partir d'une solution de silicate alcalin, en particulier d'une solution de silicate de sodium, comme précurseur.

7. Procédé selon l'une des revendications précédentes, **caractérisé en ce que** l'hydrosol présente une valeur de pH située dans la plage allant de 1 à 6, en particulier de 2 à 4, de préférence de 2 à 3, et/ou **en ce que** l'hydrosol présente une conductivité à 20 °C située dans la plage allant de 10 à 1 200 µS/cm, en particulier de 20 à 1 100 µS/cm, de préférence de 30 à 1 000 µS/cm.

8. Procédé selon l'une des revendications précédentes, **caractérisé en ce que** l'étape de procédé (a) est réalisée à température ambiante, en particulier à une température située dans la plage allant de 20 à 30 °C.

9. Procédé selon l'une des revendications précédentes, **caractérisé en ce que**, lors de l'étape de procédé (b), en particulier au début de l'étape de procédé (b), la valeur du pH de la solution ou de la dispersion, en particulier de l'hydrosol obtenu à l'étape de procédé (a), est ajustée de sorte à être située dans la plage allant de 3,5 à 7, en particulier de 3,5 à 6,5, de préférence de 4 à 6, la valeur du pH étant en particulier ajustée par l'ajout d'une base, en particulier de la soude, de l'hydroxyde de potassium et/ou une solution aqueuse d'ammoniaque, de préférence une solution aqueuse d'ammoniaque, et/ou la valeur du pH étant en particulier ajustée par l'ajout d'un acide, en particulier d'un acide minéral, de préférence de l'acide chlorhydrique.

10. Procédé selon l'une des revendications précédentes, **caractérisé en ce que** l'agent d'hydrophobisation est utilisé sous la forme d'une solution ou d'une dispersion, l'agent d'hydrophobisation étant en particulier présent à hauteur d'au moins 1 à 90 % en poids, en particulier de 10 à 80 % en poids, de préférence de 30 à 70 % en poids, de manière davantage préférée de 40 à 60 % en poids, par rapport à la solution ou à la dispersion de l'agent d'hydrophobisation.

11. Procédé selon l'une des revendications précédentes, **caractérisé en ce que** la proportion moyenne en poids des particules de sol par rapport à l'agent d'hydrophobisation varie dans la plage allant de 10:1 à 1:20, en particulier de 5:1 à 1:10, de préférence de 3:1 à 1:5, de manière davantage préférée de 2:1 à 1:4, de manière particulièrement préférée de 1:1 à 1:3.

12. Procédé selon l'une des revendications précédentes, **caractérisé en ce que**, lors de l'étape de procédé (b), l'ajout de l'agent d'hydrophobisation fait suite à l'ajustement de la valeur de pH, en particulier de 0,1 à 60 min, de préférence de 0,5 à 30 min, de manière davantage préférée de 0,5 à 15 min après l'ajustement de la valeur de pH.

13. Procédé selon l'une des revendications précédentes, **caractérisé en ce que**, lors de l'étape de procédé (b), suite à l'ajout de l'agent d'hydrophobisation, le mélange est chauffé à des températures situées dans la plage allant de 30 à 90 °C, en particulier de 35 à 85 °C, de préférence de 40 à 80 °C, de manière davantage préférée de 50 à 75 °C, de manière particulièrement préférée de 60 à 70 °C.

14. Procédé selon l'une des revendications précédentes, **caractérisé en ce que**, lors de l'étape de procédé (c), l'hydrogel est broyé en particules dont la taille absolue se trouve dans la plage allant de 0,01 à 10 mm, en particulier de 0,1 à 8 mm, de préférence de 0,3 à 7 mm, de manière davantage préférée de 0,5 à 5 mm, en particulier après séchage préalable de l'hydrogel.
